# EUROPEAN PATENT APPLICATION

(11) **EP 4 746 436 A1**
(43) Date of publication of application: **20.05.2026**
(21) Application number: 24852326.8
(22) Date of filing: 07.08.2024
(51) Int. Cl.: H04N 23/76, H04N 23/71, H04N 23/68, H04N 23/54, H04N 23/55, H04N 23/70

(54) **ELECTRONIC DEVICE PERFORMING IMAGE CORRECTION AND OPERATION METHOD THEREFOF**

(30) Priority: 10.08.2023 KR 20230105172; 08.02.2024 KR 20240019727
(71) Applicant: Samsung Electronics Co., Ltd., Suwon-si, Gyeonggi-do 16677 (KR)
(72) Inventor: LEE, Heungsu, Suwon-si Gyeonggi-do 16677 (KR); JANG, Hyosik, Suwon-si Gyeonggi-do 16677 (KR); YEO, Dongwon, Suwon-si Gyeonggi-do 16677 (KR); CHOI, Wonchul, Suwon-si Gyeonggi-do 16677 (KR)
(74) Representative: Gulde & Partner
(86) International application number: PCT/KR2024/011677
(87) International publication number: WO 2025/033972

(57) **Abstract**

An electronic device according to an embodiment may comprise: a motion sensor for outputting a signal for acquiring motion data corresponding to a movement of the electronic device; a camera module including an image sensor, and including an GIS module configured to perform optical image stabilization (GIS) on the basis of the motion data; a processor; and a memory for storing at least one instruction executable by the processor. Various other embodiments are possible.

## Description

### [Technical Field]

Various embodiments of the present disclosure relate to an electronic device performing image correction and an operation method thereof.

### [Background Art]

Electronic devices including cameras can process digital data obtained through image sensors and provide improved images. A representative example for improving images is lens shading correction (LSC).

Lens shading correction is for compensating for the optical characteristics of a lens of becoming darker toward an edge portion of an image or video. Specifically, lens shading correction can apply a gain value differently between a center portion and peripheral portion of an image frame and balance the image frame overall.

In addition, the electronic devices can perform optical image stabilization (OIS) in order to prevent image blur caused by hand shake. OIS is a method of moving lens assemblies or image sensors included in camera modules and decreasing shaking.

The above-described information may be provided as related art for the purpose of helping understanding of the present disclosure. No claim or determination is made as to whether any of the above-described content may be applied as prior art related to the present disclosure.

### [Disclosure of Invention]

### [Solution to Problem]

An electronic device according to an embodiment may include a motion sensor for outputting a signal for obtaining motion data corresponding to a movement of the electronic device, a camera module including an image sensor, and including an OIS module configured to perform optical image stabilization (OIS), based on the motion data, a processor, and a memory for storing at least one instruction executable by the processor. The at least one instruction may cause the electronic device to obtain a raw image from the camera module during the movement of the electronic device. The at least one instruction may obtain movement information of the OIS module, which is based on the motion data, and a lens shading correction (LSC) table for compensating for the brightness of the raw image. The LSC table may include a gain value for each channel for compensating for the brightness for each block of the raw image. The at least one instruction may be configured to shift the LSC table with respect to the center of the image sensor, based on the movement information, and process the brightness for each block of the raw image by channel of the shifted LSC table and generate a corrected image.

An electronic device according to an embodiment may include a motion sensor for outputting a signal for obtaining motion data corresponding to a movement of the electronic device, a camera module including a lens assembly, an image sensor, and a circuit board on which the image sensor is disposed, and including a carrier for moving the circuit board in a direction of intersecting an optical axis, to perform optical image stabilization (OIS), based on the motion data, a processor, and a memory for storing at least one instruction executable by the processor. The at least one instruction may cause the electronic device to obtain a raw image from the camera module during the movement of the electronic device. The at least one instruction may obtain movement information of the circuit board, which is based on the motion data, and an LSC table for compensating for the brightness of the raw image. The LSC table may include a gain value for each channel for compensating for the brightness for each block of the raw image. The at least one instruction may be configured to shift the LSC table with respect to the optical axis, based on the movement information, and process the brightness for each block of the raw image by channel of the shifted LSC table and generate a corrected image.

A computer-readable, non-transitory recording medium according to an embodiment of the present disclosure may store at least one command and/or instruction that, when executed, causes an electronic device to perform the above-described method or the operation of the electronic device.

### [Brief Description of Drawings]

FIG. 1 is a block diagram of an electronic device in a network environment according to various embodiments.
FIG. 2 is a block diagram of a camera module according to various embodiments.
FIG. 3 is a diagram for explaining lens shading correction according to an embodiment.
FIG. 4 is a diagram for explaining relative movement between a lens and an image sensor in a camera module according to an embodiment.
FIG. 5 illustrates shading caused by relative movement between a lens and an image sensor.
FIG. 6 is a flowchart of an operation method when OIS of an electronic device is a lens shifting method, according to an embodiment.
FIG. 7 is a diagram for explaining an LSC table according to an embodiment.
FIG. 8 is a flowchart of an operation method according to an embodiment.
FIG. 9 and FIG. 10 are diagrams for explaining operations 803 to 805 of FIG. 8 in more detail.
FIG. 11 and FIG. 12 are diagrams for explaining operations 807 to 811 of FIG. 8 in more detail.
FIG. 13 is a diagram for explaining an extended LSC table, etc., according to an embodiment.
FIG. 14 is a flowchart of an operation method when OIS of an electronic device is a sensor shifting method, according to an embodiment.

### [Mode for the Invention]

Preferred embodiments of the present disclosure are described below in detail with reference to the accompanying drawings. Advantages and features of the present invention, and a method for achieving them, will become clear by referring to embodiments described in detail below together with the accompanying drawings. However, the present invention is not limited to embodiments disclosed below, but may be implemented in various different forms, and the present embodiments are provided to just make the present disclosure of the present invention complete and to fully inform the scope of the present invention to those skilled in the art to which the present invention pertains, and the present invention is merely defined by the scope of the claims. Throughout the specification, the same reference numerals refer to the same components.

Unless defined otherwise, all terms (including technical and scientific terms) used in the present specification may have meanings capable of being commonly understood by those skilled in the art to which the present invention pertains. In addition, terms defined in commonly used dictionaries are not to be interpreted ideally or excessively unless explicitly specifically defined otherwise. The terms used in the present specification is for the purpose of describing embodiments and is not intended to limit the present invention. In the present specification, the singular form also includes the plural form unless specifically stated in a phrase.

"Comprises" and/or "comprising" used in the specification mean that components, operations, and operations and/or elements stated do not exclude the presence or addition of one or more other components, operations, and operations and/or elements.

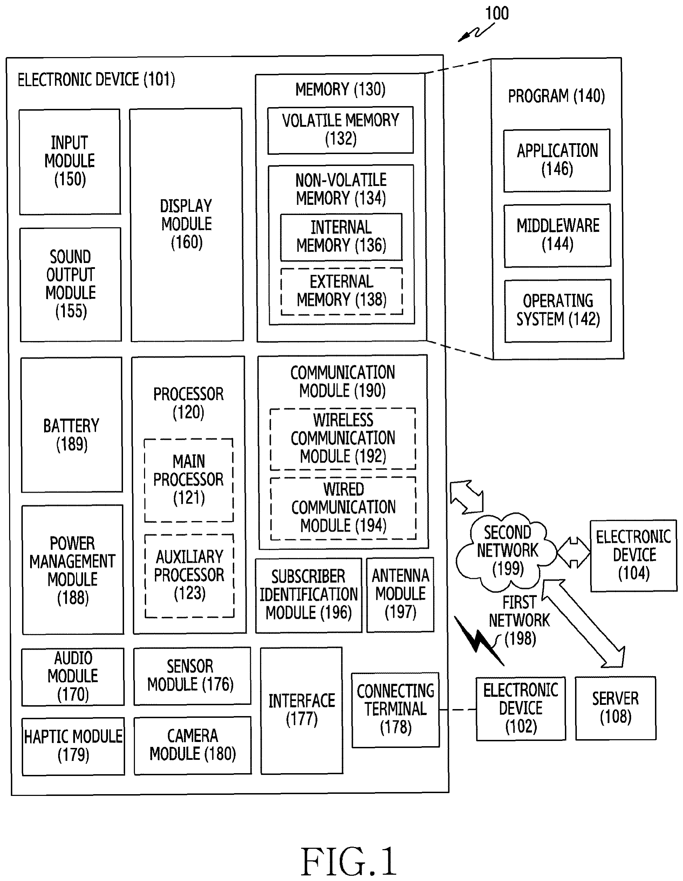

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

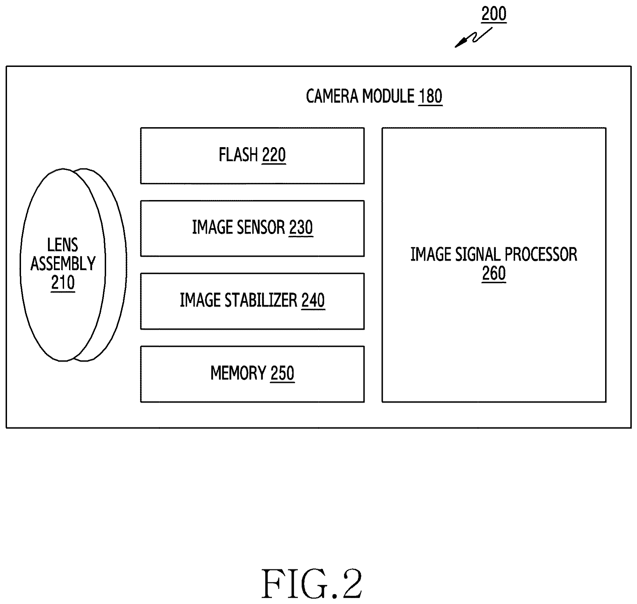

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

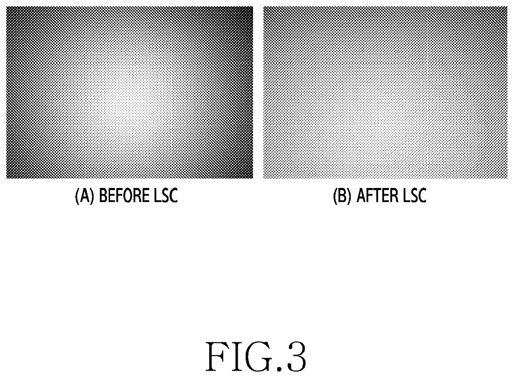

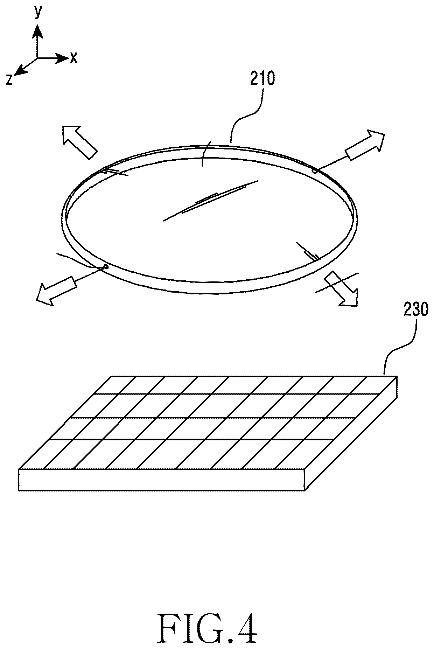

Meanwhile, according to an embodiment, the electronic device 101 may generate raw data for generating a raw image through the camera module 180. The camera module 180 according to an embodiment may include the image signal processor 260. The image signal processor 260 according to an embodiment may perform at least one image processing process on a raw image that is raw data obtained through the image sensor 230. For example, the image signal processor 260 may perform lens shading correction (LSC) and image stabilization (e.g., video digital image stabilization (VDIS), electrical image stabilization (EIS), and optical image stabilization (OIS)) correction. Through lens shading correction, the electronic device 101 may provide an image having a balanced brightness by compensating for an insufficient amount of light in a peripheral portion of a captured raw image. In addition, through VDIS correction, the electronic device 101 may provide an image of less shaking by extracting a specific area of input frames having shaking from a raw image as an output frame in consideration of a movement of the electronic device 101. For example, the camera module 180 may include a method of performing software processing on a data output value of the image sensor 230 and correcting video shaking. The camera module 180 may extract a motion vector, based on a difference (different image) between a frame and a frame of a video, through VDIS correction that is digital image stabilization, and increase clarity through image processing. In addition, the camera module 180 may extract a motion vector, based on a video, through VDIS correction, and recognize, as shaking, the movement of a subject itself in addition to the shaking of the electronic device 100. Each of lens shading correction and VDIS correction will be described below in detail with reference to FIGS. 3 and 4.

FIG. 3 is a diagram for explaining lens shading correction according to an embodiment.

Lens shading is a phenomenon in which a peripheral portion of an image/video becomes darker due to the optical characteristics of a lens. Referring to FIG. 3, a peripheral portion of a first image (A) is darker than a center portion of the first image (A) due to its relatively low amount of light. This phenomenon may occur due to a decrease of the amount of light in the peripheral portion of the first image (A), because an image circle diameter of the lens is shorter than a diagonal length of a captured scene. To compensate for the phenomenon of darkening toward the peripheral portion of the first image (A), lens shading correction (LSC) may alleviate an imbalance of brightness between the center portion and peripheral portion of the first image (A) by dividing the first image (A) by block of the first image (A) (by pixel of the image sensor) and applying predefined gain values to blocks of the first image (A). LSC may be performed by an image signal processor 260, and may balance the brightness within the first image (A) by applying a higher gain value to an area further away from the center portion of the first image (A) (or center of the lens). Referring to FIG. 3, it is confirmed that a peripheral portion of a second image (B) processed with LSC is brighter than the peripheral portion of the first image (A).

By dividing a raw image into a plurality of blocks and storing gain values for the respective blocks in a memory 250, the image signal processor 260 according to an embodiment may use the stored gain values when processing LSC. The gain value for the block of the raw image generally increases from the center of a lens to a peripheral portion of the lens. The gain value may be assigned to each channel of an LSC table.

The image signal processor 260 according to an embodiment may perform LSC after converting a raw image into a format having a raw Bayer pattern. The raw Bayer pattern corresponds to a format of image data provided in a form of alternate arrangement where G is 50% and each of R and B is 25% in accordance with human visual characteristics. For example, the image signal processor 260 may perform LSC after a remosaic operation of converting into a pattern (e.g., raw Bayer pattern) capable of performing a demosaic operation. The image signal processor 260 according to an embodiment may compensate for the brightness of the raw image by directly multiplying a previously stored gain value for each of R, G, and B channels.

The image signal processor 260 according to an embodiment may perform demosaic after performing LSC. Demosaic is a process of inferring monochrome pixels into a three-color (RGB) image again by using information of peripheral pixels. For example, the image signal processor 260 may perform an operation of converting an image frame output from the image sensor 230 into an image (e.g., three-color image) having a color value expressed similarly to that perceived by the human eyes.

According to an embodiment, the remosaic, LSC, and demosaic operations are not limited to those performed by the image signal processor 260. For example, the remosaic, LSC, and demosaic operations may be performed by the image sensor 230 or the processor 120 (e.g., application processor (AP)).

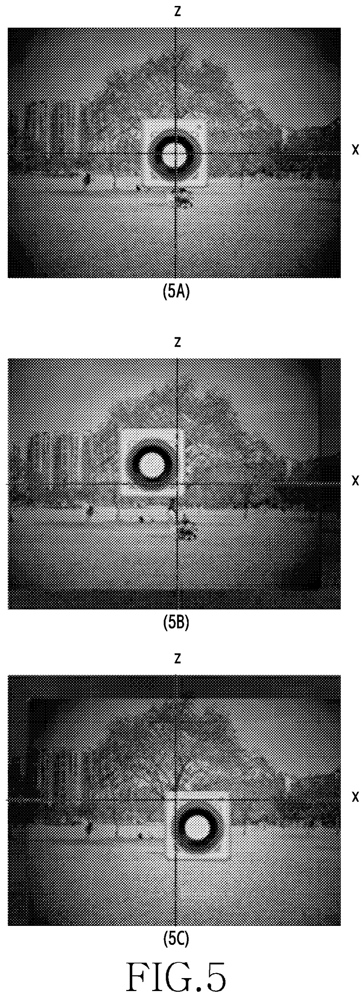

FIG. 4 is a diagram for explaining a relative movement between a lens and an image sensor in a camera module according to an embodiment, and FIG. 5 illustrates shading caused by the relative movement between the lens and the image sensor.

Optical image stabilizer (OIS), an optical image stabilization technology, is for preventing blur caused by hand shake, and may move a lens in an X axis, a Y axis, and a Z axis through an OIS module in a camera module, thereby causing light reflected from an object (not shown) to be received at the center of an image sensor 230. As the lens moves, a path through which light gathers on the image sensor 230 and the amount of received light for each position of the image sensor 230 are changed, but general LSC compensates for brightness only in a fixed position of the image sensor 230.

Referring to FIGS. 4 and 5, the lens (or lens assembly 210) may move relatively with respect to the image sensor 230 on a Z-X plane, and the center of the lens and the center of the image sensor 230 may exist at different points on the Z-X plane by an OIS operation, respectively.

As illustrated in FIG. 5 (5A), when the OIS operation is off, since the center of the lens matches the center of the image sensor 230, a shading distribution by the lens between a center portion of a raw image and a peripheral portion of the raw image is symmetrical with respect to the Z axis and the X axis.

On the other hand, as illustrated in FIG. 5 (5B) or (5C), when the OIS operation is on, since the center of the lens does not match the center of the image sensor 230, the shading distribution by the lens between the center portion and peripheral portion of the raw image is not symmetrical but biased.

An OIS method may include a lens shifting method of fixing the image sensor 230 and moving the lens, and a sensor shifting method of fixing the lens and moving the image sensor 230. As described above, when the relative movement occurs between the lens and the image sensor 230, a position where light gathers on the image sensor 230 is changed. In principle, LSC may compensate for the brightness of the image with a criterion of the center of the image sensor 230, regardless of the position of the lens. Therefore, if the LSC table is applied to the image without considering the relative movement between the lens and the image sensor 230, a brightness deviation between the center portion and peripheral portion of the raw image may occur, although LSC is performed.

Meanwhile, the LSC table may be data assigning a gain value by position of blocks of the raw image, based on shading profile data. The LSC table may be data assigning a gain value for each channel of the LSC table corresponding to the position of the block of the raw image. The LSC table may have a plurality of channels arranged in rows and columns, and the position of each channel of the LSC table may correspond to the position of the block of the image. For example, the gain value assigned to one channel in the LSC table may be applied to the block of the image corresponding to the channel of the LSC table. The shading profile data is a brightness distribution for each area of the image, and may include a brightness value dependent on the position of the block of the raw image. Since the brightness for each position of the image becomes darker from the center portion to peripheral portion of the raw image, the gain value may have a relatively larger value from the center portion to peripheral portion of the raw image. Here, the gain value may correspond to a correction value multiplied by RGB data of the image and/or Y data of YUV. In YUV, Y denotes a luma component or a brightness, and UV denotes chrominance components or color information.

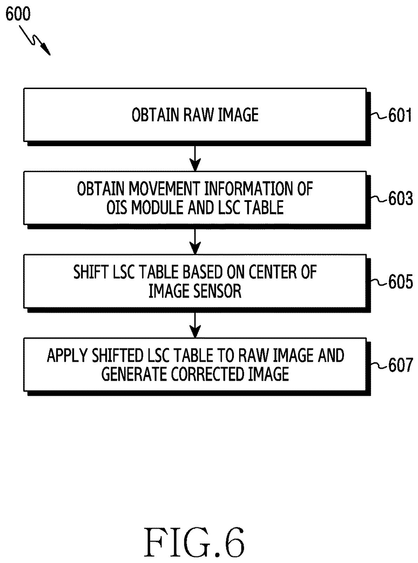

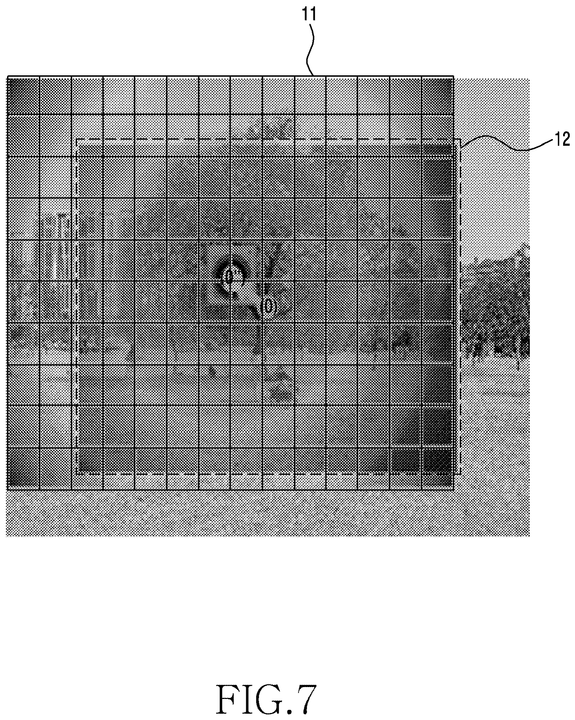

FIG. 6 is a flowchart 600 of an operation method when OIS of an electronic device is a lens shifting method, according to an embodiment, and FIG. 7 is a diagram for explaining an LSC table according to an embodiment.

A processor 120 or 260 according to an embodiment may obtain a raw image through an image sensor 230 (601). The raw image has a characteristic that a peripheral portion of the raw image is darker than a center portion of the raw image due to lens shading.

By dividing the raw image into a plurality of blocks and storing gain values of an LSC table corresponding to the respective blocks of the raw image in a memory 130 or 250, the processor 120 or 260 according to an embodiment may use the stored gain values of the LSC table when performing LSC processing. The gain value of the LSC table generally increases from the center of the lens to a peripheral portion of the lens.

The processor 120 or 260 according to an embodiment may perform LSC after converting the raw image into a format having a raw Bayer pattern. The raw Bayer pattern corresponds to a format of image data provided in a form of alternate arrangement where G is 50% and each of R and B is 25% in accordance with human visual characteristics. The processor 120 or 260 according to an embodiment may compensate for the brightness of the raw image by multiplying R, G, and B data by previously stored gain values. In addition, the processor 120 or 260 according to an embodiment may compensate for the brightness of the raw image by multiplying an R, G, and B average value by the previously stored gain values. In addition, the processor 120 or 260 according to an embodiment may compensate for the brightness of the raw image by applying the gain value to Y data of YUV.

The processor 120 or 260 according to an embodiment may obtain movement information of the OIS module, and an LSC table (603).

For example, the movement information of the OIS module corresponds to data required for shifting (coordinate movement) of the LSC table. When the electronic device 101 takes a photo or video by using a camera, data about the amount of shake may be transmitted from a motion sensor (not shown) within the electronic device 101 to the processor 120 or 260. The processor 120 or 260 may provide, to the OIS module (actuator), a target signal for moving the lens in a direction opposite to shake. The processor 120 or 260 may perform OIS correction by controlling the OIS module to move the lens (lens assembly 210) with respect to the image sensor 230, based on the target signal.

According to an embodiment, the motion sensor provides motion data to the processor 120 or 260 and causes the processor 120 or 260 to process the motion data and obtain a motion level. The motion level is a measure of a movement of the electronic device 101. The motion data is data about a physical momentum of the electronic device 101, and may be obtained through a signal output from the motion sensor. Specifically, the motion data may include at least one of data processed from a signal generated by an acceleration sensor, a gyro sensor (gyroscope), a magnetic sensor, or a Hall sensor.

According to an embodiment, the motion sensor may include at least one of an acceleration sensor, a gyro sensor (gyroscope), a magnetic sensor, or a Hall sensor. For example, the acceleration sensor may measure acceleration that acts in three axes (e.g., X axis, Y axis, or Z axis) of the electronic device 101. In another example, the gyro sensor may measure a rotation angle or tilt about the three axes (e.g., X axis, Y axis, or Z axis) of the electronic device 101. However, the aforementioned sensors are exemplary, and the motion sensor may further include at least one other type of sensor.

According to an embodiment, the motion sensor may include at least one of the acceleration sensor for outputting a signal for obtaining acceleration data and the gyro sensor for outputting a signal for obtaining angular velocity data. The processor 120 or 260 may obtain motion data corresponding to a movement of the electronic device 101, based on at least one of the acceleration data and the angular velocity data.

The LSC table corresponds to data for reducing a brightness deviation between a center portion of the raw image and a peripheral portion of the raw image. The LSC table may be composed of a plurality of channels, and each channel may be assigned a gain value. The gain values of the LSC table are reflected in an MxN matrix, and a row-column position of each component of the MxN matrix may correspond to the position of a block within the raw image.

The gain values of the LSC table according to an embodiment may be determined based on auto exposure (AE) and auto white balance (AWB) information.

The processor 120 or 260 according to an embodiment may shift the LSC table with respect to the center of the image sensor 230 (605).

When the electronic device 101 captures a scene of a specific field of view, a path through which light gathers on the image sensor 230 may be changed depending on the position of a lens. Referring to FIG. 7, as a central axis of the lens moves (O -> O") by an OIS operation, a shading distribution for a region of interest (e.g., region 12 of FIG. 7) of the raw image captured by the image sensor 230 is changed. If an LSC table applied to the region of interest of the raw image is always fixed with respect to the image sensor 230, the electronic device 101 may not resolve a brightness deviation between respective blocks within the region of interest of the raw image. Therefore, the present disclosure may reflect an appropriate gain value of the LSC table for each block of the raw image, by shifting (e.g., region 11 of FIG. 7) the LSC table in consideration of lens movement caused by the OIS operation. Accordingly, the electronic device 101 according to the present disclosure may minimize the brightness deviation of the obtained raw image, although the path through which light gathers on the image sensor 230 is applied differently due to the lens movement.

According to an embodiment, the OIS module may include a lens assembly 210, and an actuator (e.g., image stabilizer 240 of FIG. 2) for moving the lens assembly 210 in a direction of intersecting an optical axis. The processor 120 or 260 may shift the LSC table, based on the movement information of the OIS module. The movement information of the OIS module may include a first displacement value and a second displacement value that are coordinate values of the center of the lens assembly 210 taking the center of the image sensor 230 as an origin point. The processor 120 or 260 may shift the LSC table, based on the first displacement value and the second displacement value.

The processor 120 or 260 according to an embodiment may apply the shifted LSC table to the raw image and generate a corrected image (607). As the shifted LSC table is applied to the raw image, the processor 120 or 260 may minimize the brightness deviation of the raw image and may improve image quality stability.

The blocks of the raw image according to an embodiment may be assigned a red (R) value, a green (G) value, and a blue (B) value, respectively. The processor 120 or 260 may apply the gain values included in the shifted LSC table to the red (R) value, green (G) value, and blue (B) value, and compensate for the brightness of the raw image.

Meanwhile, the LSC table applied to the raw image may have a series of processing processes that are added based on the number of channels of the LSC table relative to the size of the image sensor 230. For example, a size ratio of the LSC table may match a size (number of pixels) ratio of the image sensor 230. Therefore, by matching the number of channels of the LSC table with the number of blocks of the raw image, the processor 120 or 260 may apply gain values of the LSC table to all data for each block of the raw image. For example, when the number of channels of the LSC table is composed of MxN, the number of blocks of the raw image may also be composed of MxN.

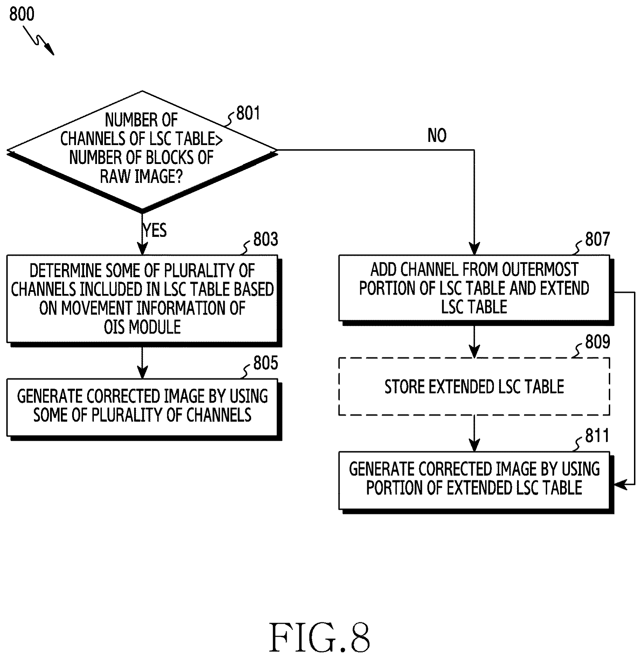

FIG. 8 is a flowchart 800 of an operation method according to an embodiment.

Referring to FIG. 8, a processor according to an embodiment may extend an LSC table, based on a comparison 801 between the number of channels of the LSC table and the number of blocks of a raw image.

If the number of channels of the LSC table is greater than the number of blocks of the raw image, the processor according to an embodiment may determine some of a plurality of channels included in the LSC table, based on movement information of an OIS module (803), and generate a corrected image by using some of the plurality of channels (805).

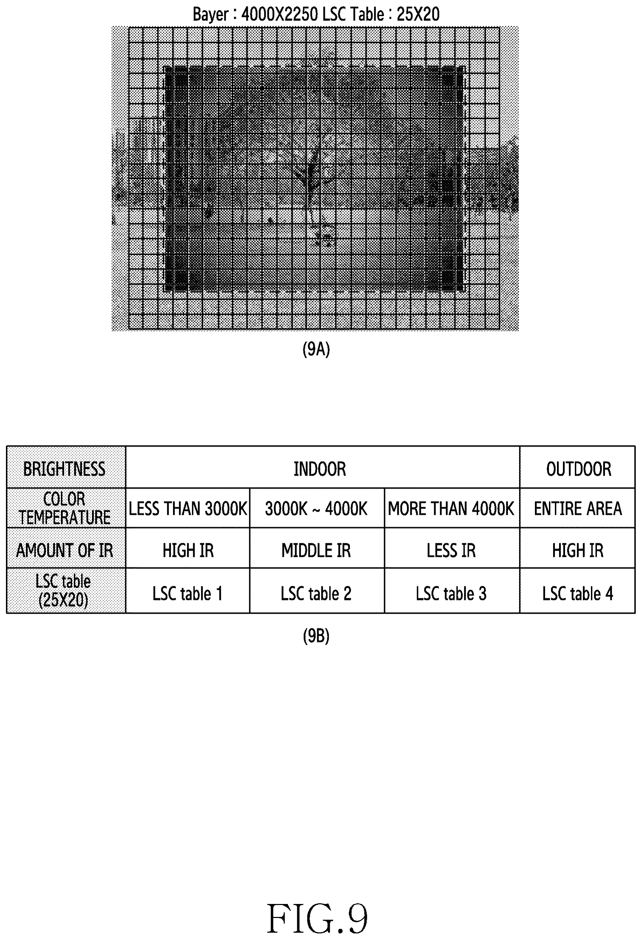

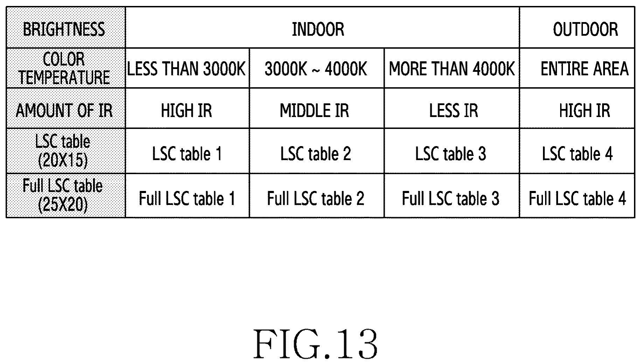

For example, referring to FIG. 9, when an image sensor 230 has 4000x2250 cells, and the size of a Bayer pattern block is set to 200x150, the number of blocks of the raw image becomes 20x15. In this case, since the number of channels of the LSC table is 25x20 and thus is greater than the number of blocks of the raw image (FIG. 9 (9A)), the LSC table is sufficient to apply gain values of the LSC table to all RGB values or Y values corresponding to all blocks of the raw image. Meanwhile, as illustrated in FIG. 9 (9B), the LSC table may be composed of a plurality of LSC tables whose gain values are different depending on a brightness determined by an auto exposure (AE) algorithm and a color temperature determined by an auto white balance (AWB) algorithm. This will be described later with reference to FIG. 13.

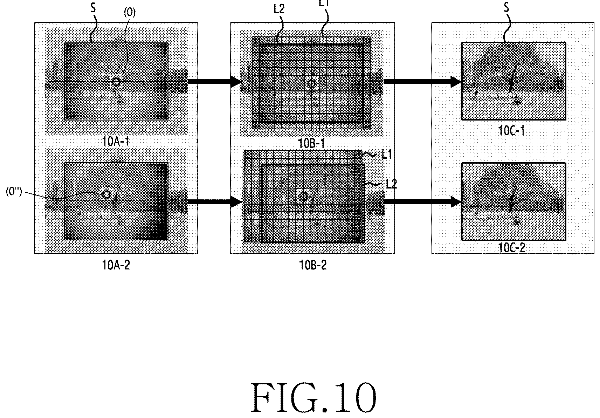

Referring to FIG. 10, when an OIS operation is not performed, that is, when a central axis of a lens assembly 210 is aligned with a central axis of the image sensor 230, a corrected image may be generated by applying only a portion L2 of an LSC table L1 to a raw image (10A-1, 10B-1, and 10C-1).

When the OIS operation is being performed, i.e., when the electronic device 101 detects hand shake and the central axis of the lens assembly 210 is not aligned with the central axis of the image sensor 230, a corrected image may be generated by applying only a portion L2 of a shifted LSC table L1 to the raw image (10A-2, 10B-2, and 10C-2).

When the number of channels of the LSC table is greater than the number of blocks of the raw image, the processor 120 or 260 according to an embodiment may generate a corrected image by using some of the plurality channels included in the LSC table. In this case, the range of some of the plurality channels may be determined based on the movement information of the OIS module.

Meanwhile, when the number of channels of the LSC table is equal to the number of blocks of the raw image (or when the number of channels of the LSC table is less than the number of blocks of the raw image), the processor 120 or 260 according to an embodiment may add channels to the LSC table from an outermost portion of the LSC table and extend the LSC table (807), and generate a corrected image by using a portion of the extended LSC table (811). For example, when the number of channels of the LSC table is 20x15, if the channel is added one by one to the LSC table from the outermost portion of the LSC table, the number of channels of the extended LSC table becomes 22x17. Additionally, when the channels are added to the outermost portion of the LSC table and the LSC table is extended, the processor 120 or 260 according to an embodiment may also perform an operation of storing the extended LSC table (809) for future use in an LSC process.

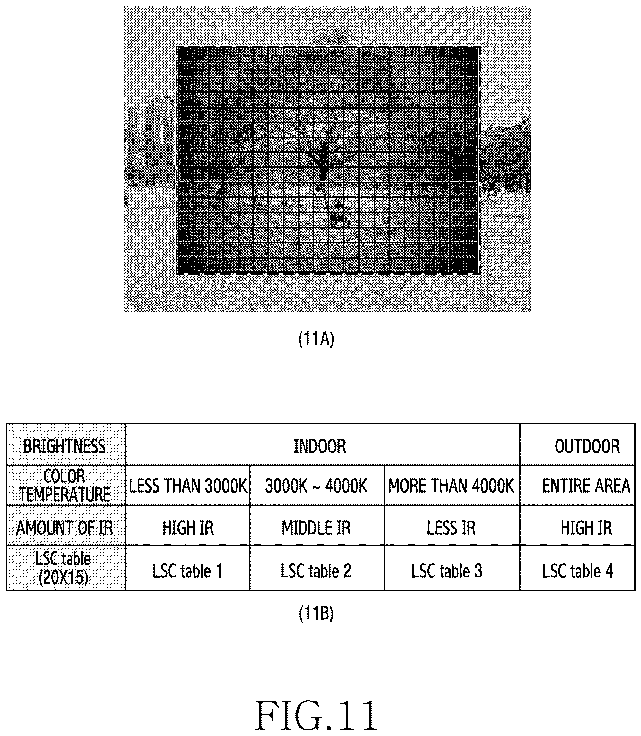

For example, referring to FIG. 11, when an image sensor 230 has 4000x3000 cells, and the size of a Bayer pattern block is set to 200x200, the number of blocks of a raw image becomes 20x15. In this case, since the number (e.g., 20x15) of channels of an LSC table is equal to the number of blocks of the raw image, when the LSC table gets out of a region of interest S of the raw image by an OIS operation, gain values may not be applied to all RGB values or Y values corresponding to blocks corresponding to the entire region of interest S of the raw image (FIG. 11 (11A)). Therefore, if the number of channels of the LSC table is equal to the number of blocks of the raw image, the processor 120 or 260 according to an embodiment may add the number of channels for the LSC table, and extend the LSC table so as to adjust the brightness of all blocks within the region of interest S of the raw image. Meanwhile, as illustrated in FIG. 11 (11B), the LSC table may be composed of a plurality of LSC tables whose gain values are different depending on a brightness determined by an auto exposure (AE) algorithm and a color temperature determined by an auto white balance (AWB) algorithm. This will be described later with reference to FIG. 13.

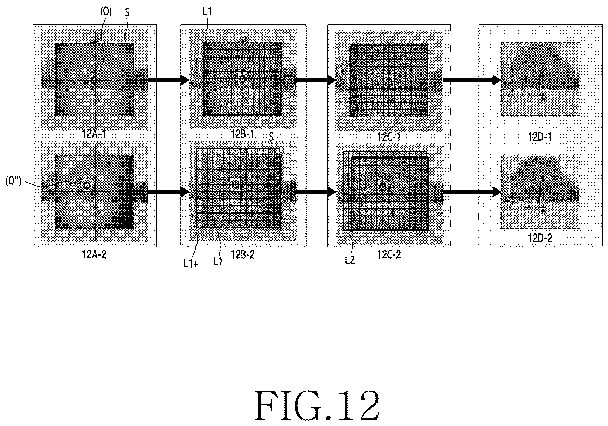

Referring to FIG. 12, when the OIS operation is not performed, that is, when the central axis of the lens assembly 210 is aligned with the central axis of the image sensor 230, a corrected image may be generated by applying the entire LSC table L1 to a raw image (12A-1, 12B-1, 12C-1, and 12D-1).

When the OIS operation is performed, since a portion of the LSC table L1 may not provide gain values to all blocks of a region of interest S of a raw image, the processor 120 or 260 according to an embodiment may generate an extended LSC table L1+ by adding channels to the LSC table from an outermost portion of the LSC table. In addition, the processor 120 or 260 according to an embodiment may generate a corrected image by applying only a portion L2 of the extended LSC table L1+ to the raw image (12A-2, 12B-2, 12C-2, and 12D-2).

If the number of channels of the LSC table is equal to the number of blocks of the raw image, the processor 120 or 260 according to an embodiment may extend the LSC table by adding channels to the LSC table from the outermost portion of the LSC table. In this case, a gain value of a channel added in adjacent to the outermost portion of the LSC table may be a value equal to or greater than a gain value of an adjacent channel (considering the characteristic that the amount of light decreases toward an edge portion of a lens). The processor 120 or 260 according to an embodiment may generate a corrected image by using some of a plurality channels included in the extended LSC table.

After shifting the LSC table based on the movement information of the OIS module, the processor 120 or 260 according to an embodiment may generate a full LSC table, based on the gain value of the added channel, and store and reuse the generated full LSC table.

FIG. 13 is a diagram for explaining an extended LSC table, etc., according to an embodiment.

Basically, a LSC table may reflect the geometric and optical characteristics of a lens, have a relatively low gain value toward a channel of the LSC table corresponding to a center portion of a raw image, and have a relatively high gain value toward a channel of the LSC table corresponding to a peripheral portion of the raw image.

The gain value of the LSC table according to an embodiment may be determined based on an ambient illuminance of an electronic device 101. As the amount of light received by an image sensor 230 increases, since a brightness deviation between the center portion and peripheral portion of the raw image decreases, a standard deviation of the gain value may decrease toward the right of Table of FIG. 13.

The gain value of the LSC table according to an embodiment may be determined based on a brightness determined by an auto exposure (AE) algorithm and a color temperature determined by an auto white balance (AWB) algorithm. For example, in the AE algorithm, an LSC table including a gain value whose standard deviation decreases as the amount of infrared (IR) decreases may be applied to image correction. In addition, in the AWB algorithm, an LSC table including a gain value whose standard deviation decreases as the color temperature increases may be applied to the image correction.

A processor according to an embodiment may distinguish between indoor and outdoor environments, based on illuminance, apply an outdoor LSC table (LSC table 4) when it is determined to be the outdoor environment, and adjust a gain value of the LSC table corresponding to the peripheral portion of the raw image, based on the color temperature and/or the amount of IR, when it is determined to be the indoor environment.

Each of full LSC tables (full LSC tables 1 to 4) according to an embodiment may further include a gain value for each channel estimated from the gain value of the LSC table corresponding to the peripheral portion of the raw image.

The electronic device 101 according to an embodiment may further include an illuminance sensor for outputting a signal for measuring illuminance around the electronic device 101. The processor according to an embodiment may apply a weight to the gain value for each channel of the LSC table, based on the illuminance.

The processor according to an embodiment may select any one of a previously stored plurality of LSC tables but, when the illuminance exceeds a predefined illuminance, may select and apply any one of the plurality of LSC tables to a raw image. Here, the selected LSC table may correspond to the outdoor LSC table (e.g., LSC table 4 and full LSC table 4) in FIG. 13.

The processor according to an embodiment may select any one of the previously stored plurality of LSC tables but, when the illuminance is less than or equal to the predefined illuminance, may select and apply any one of the plurality of LSC tables to the raw image. Here, the selected LSC table may correspond to an indoor LSC table (e.g., LSC tables 1 to 3 and full LSC tables 1 to 3) in FIG. 13.

The gain value for each channel of the LSC table according to an embodiment may be determined based on the color temperature and the amount of infrared.

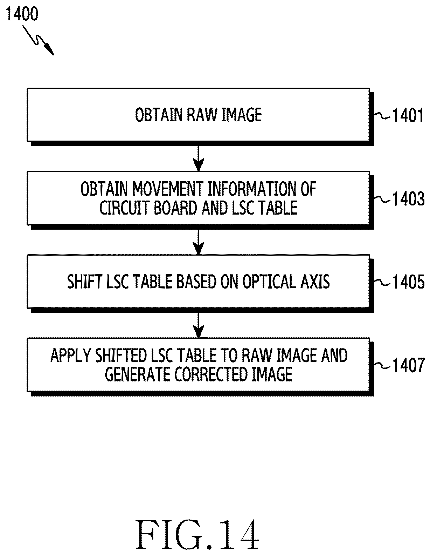

FIG. 14 is a flowchart 1400 of an operation method when OIS of an electronic device is a sensor shifting method, according to an embodiment.

A processor 120 or 260 according to an embodiment may obtain a raw image through an image sensor 230 (1401). The raw image has a characteristic that a peripheral portion of the raw image is darker than a center portion of the raw image due to lens shading.

By dividing the raw image into a plurality of blocks and storing gain values of an LSC table corresponding to the respective blocks of the raw image in a memory 130 or 250, the processor 120 or 260 according to an embodiment may use the stored gain values of the LSC table when performing LSC processing. The gain value of the LSC table generally increases from the center of the lens to a peripheral portion of the lens.

The processor 120 or 260 according to an embodiment may perform LSC after converting the raw image into a format having a raw Bayer pattern. The raw Bayer pattern corresponds to a format of image data provided in a form of alternate arrangement where G is 50% and each of R and B is 25% in accordance with human visual characteristics. The processor 120 or 260 according to an embodiment may compensate for the brightness of the raw image by multiplying R, G, and B data by the previously stored gain values. In addition, the processor 120 or 260 according to an embodiment may compensate for the brightness of the raw image by multiplying an R, G, and B average value by the previously stored gain values. In addition, the processor 120 or 260 according to an embodiment may compensate for the brightness of the raw image by applying the gain value to Y data of YUV.

The processor 120 or 260 according to an embodiment may obtain movement information of a circuit board (e.g., board including/moving the image sensor 230), and an LSC table (1403).

The present embodiment may be a sensor shifting method in which OIS is performed by moving the image sensor 230 in a direction of substantially intersecting an optical axis, rather than a lens shifting method in which OIS is performed by moving a lens assembly 210 with respect to the image sensor 230.

For example, the movement information of the circuit board corresponds to data required for shifting (coordinate movement) of the LSC table. When the electronic device 101 takes a photo or video by using a camera, data about the amount of shake may be transmitted from a motion sensor (not shown) within the electronic device 101 to the processor 120 or 260. The processor 120 or 260 may provide, to the circuit board, a target signal for moving the circuit board moving the image sensor 230 in a direction opposite to shake. The processor 120 or 260 may perform OIS correction by controlling the circuit board to move the image sensor 230, based on the target signal.

According to an embodiment, the motion sensor provides motion data to the processor 120 or 260 and causes the processor 120 or 260 to process the motion data and obtain a motion level. The motion level is a measure of a movement of the electronic device 101. The motion data is data about a physical momentum of the electronic device 101, and may be obtained through a signal output from the motion sensor. Specifically, the motion data may include at least one of data processed from a signal generated by an acceleration sensor, a gyro sensor (gyroscope), a magnetic sensor, or a Hall sensor.

According to an embodiment, the motion sensor may include at least one of an acceleration sensor, a gyro sensor (gyroscope), a magnetic sensor, or a Hall sensor. For example, the acceleration sensor may measure acceleration that acts in three axes (e.g., X axis, Y axis, or Z axis) of the electronic device 101. In another example, the gyro sensor may measure a rotation angle or tilt about the three axes (e.g., X axis, Y axis, or Z axis) of the electronic device 101. However, the aforementioned sensors are exemplary, and the motion sensor may further include at least one other type of sensor.

According to an embodiment, the motion sensor may include at least one of the acceleration sensor for outputting a signal for obtaining acceleration data and the gyro sensor for outputting a signal for obtaining angular velocity data. The processor 120 or 260 may obtain motion data corresponding to a movement of the electronic device 101, based on at least one of the acceleration data and the angular velocity data.

The LSC table corresponds to data for reducing a brightness deviation between a center portion of the raw image and a peripheral portion of the raw image. The LSC table may be composed of a plurality of channels, and each channel may be assigned a gain value. The gain values of the LSC table are reflected in an MxN matrix, and a row-column position of each component of the MxN matrix may correspond to the position of a block within the image.

The gain values of the LSC table according to an embodiment may be determined based on auto exposure (AE) and auto white balance (AWB) information.

The processor 120 or 260 according to an embodiment may shift the LSC table with respect to the optical axis (1405).

The processor 120 or 260 according to an embodiment may apply the shifted LSC table to the raw image and generate a corrected image (1407). As the shifted LSC table is applied to the raw image, the processor 120 or 260 may minimize the brightness deviation of the raw image and may improve image quality stability.

The blocks of the raw image according to an embodiment may be assigned a red (R) value, a green (G) value, and a blue (B) value, respectively. The processor 120 or 260 may apply the gain values included in the shifted LSC table to the red (R) value, green (G) value, and blue (B) value and compensate for the brightness of the raw image.

The technical task to be achieved in the present disclosure is not limited to the technical tasks mentioned above, and other technical tasks not mentioned may be clearly understood by those skilled in the art to which the present disclosure pertains.

An electronic device 101 according to an embodiment may include a motion sensor for outputting a signal for obtaining motion data corresponding to a movement of the electronic device 101, a camera module 180 including an image sensor 230, and including an OIS module configured to perform optical image stabilization (OIS), based on the motion data, a processor 120, and a memory 130 for storing at least one instruction executable by the processor 120. The at least one instruction may be configured to cause the electronic device 101 to obtain a raw image from the camera module 180 during the movement of the electronic device 101, obtain movement information of the OIS module, which is based on the motion data, and a lens shading correction (LSC) table for compensating for the brightness of the raw image, wherein the LSC table includes a gain value for each channel for compensating for the brightness for each block of the raw image, shift the LSC table with respect to the center of the image sensor 230, based on the movement information, and process the brightness for each block of the raw image by channel of the shifted LSC table and generate a corrected image.

The OIS module according to an embodiment may include a lens assembly, and an actuator for moving the lens assembly in a direction of intersecting an optical axis. The movement information of the OIS module according to an embodiment may include a first displacement value and a second displacement value that are coordinate values of the center of the lens assembly taking the center of the image sensor as an origin point. The at least one instruction according to an embodiment may shift the LSC table, based on the first displacement value and the second displacement value.

When the number of channels of the LSC table is greater than the number of blocks of the raw image, the electronic device according to an embodiment may generate the corrected image by using some of a plurality of channels included in the LSC table.

When the number of channels of the LSC table is equal to the number of blocks of the raw image, the electronic device according to an embodiment may extend the LSC table by adding a channel to the LSC table from the outermost portion of the LSC table, and generate the corrected image by using some of a plurality of channels included in the extended LSC table.

The electronic device according to an embodiment may further include an illuminance sensor for outputting a signal for measuring illuminance around the electronic device. The electronic device according to an embodiment may apply a weight to the gain value for each channel of the LSC table, based on the illuminance.

The electronic device according to an embodiment may select any one LSC table from among a previously stored plurality of LSC tables but, when the illuminance exceeds a predefined illuminance, may select a first LSC table from among the plurality of LSC tables.

The electronic device according to an embodiment may select any one LSC table from among a previously stored plurality of LSC tables but, when the illuminance is less than or equal to a predefined illuminance, may select a second LSC table from among the plurality of LSC tables.

The gain value for each channel of the LSC table according to an embodiment may be determined based on a color temperature and the amount of infrared.

The motion sensor according to an embodiment may include at least one of an acceleration sensor for outputting a signal for obtaining acceleration data or a gyro sensor for outputting a signal for obtaining angular velocity data. The electronic device according to an embodiment may obtain motion data corresponding to the movement of the electronic device, based on at least one of the acceleration data or the angular velocity data.

The blocks of the raw image according to an embodiment may be assigned a red (R) value, a green (G) value, and a blue (B) value, respectively. The electronic device according to an embodiment may apply the gain values to the red (R) value, the green (G) value, and the blue (B) value and compensate for the brightness of the raw image.

An electronic device 101 according to an embodiment may include a motion sensor for outputting a signal for obtaining motion data corresponding to a movement of the electronic device 101, a camera module 180 including a lens assembly 210, an image sensor 230, and a circuit board on which the image sensor 230 is disposed, and including a carrier for moving the circuit board in a direction of intersecting an optical axis, to perform optical image stabilization (OIS), based on the motion data, a processor 120, and a memory 130 for storing at least one instruction executable by the processor 120. The at least one instruction may be configured to cause the electronic device 101 to obtain a raw image from the camera module 180 during the movement of the electronic device 101, obtain movement information of the circuit board, which is based on the motion data, and an LSC table for compensating for the brightness of the raw image, wherein the LSC table includes a gain value for each channel for compensating for the brightness for each block of the raw image, shift the LSC table with respect to the optical axis, based on the movement information, and process the brightness for each block of the raw image by channel of the shifted LSC table and generate a corrected image.

The movement information of the circuit board according to an embodiment may include a first displacement value and a second displacement value that are coordinate values of the center of the image sensor taking the center of the lens assembly as an origin point. The electronic device according to an embodiment may shift the LSC table, based on the first displacement value and the second displacement value.

When the number of channels of the LSC table is greater than the number of blocks of the raw image, the electronic device according to an embodiment may generate the corrected image by using some of a plurality of channels included in the LSC table.

When the number of channels of the LSC table is equal to the number of blocks of the raw image, the electronic device according to an embodiment may extend the LSC table by adding a channel to the LSC table from the outermost portion of the LSC table, and generate the corrected image by using some of a plurality of channels included in the extended LSC table.

The electronic device according to an embodiment may further include an illuminance sensor for outputting a signal for measuring illuminance around the electronic device. The electronic device according to an embodiment may apply a weight to the gain value for each channel of the LSC table, based on the illuminance.

The electronic device according to an embodiment may select any one LSC table from among a previously stored plurality of LSC tables but, when the illuminance exceeds a predefined illuminance, may select a first LSC table from among the plurality of LSC tables.

The electronic device according to an embodiment may select any one LSC table from among a previously stored plurality of LSC tables but, when the illuminance is less than or equal to a predefined illuminance, may select a second LSC table from among the plurality of LSC tables.

The gain value for each channel of the LSC table according to an embodiment may be determined based on a color temperature and the amount of infrared.

The motion sensor according to an embodiment may include at least one of an acceleration sensor for outputting a signal for obtaining acceleration data or a gyro sensor for outputting a signal for obtaining angular velocity data. The electronic device according to an embodiment may obtain motion data corresponding to the movement of the electronic device, based on at least one of the acceleration data or the angular velocity data.

The motion sensor according to an embodiment may include at least one of an acceleration sensor for outputting a signal for obtaining acceleration data or a gyro sensor for outputting a signal for obtaining angular velocity data. The electronic device according to an embodiment may obtain motion data corresponding to the movement of the electronic device, based on at least one of the acceleration data or the angular velocity data.

The blocks of the raw image according to an embodiment may be assigned a red (R) value, a green (G) value, and a blue (B) value, respectively. The electronic device according to an embodiment may apply the gain values to the red (R) value, the green (G) value, and the blue (B) value and compensate for the brightness of the raw image.

Effects obtainable from the present disclosure are not limited to the effects mentioned above, and other effects not mentioned may be clearly understood by those skilled in the art to which the present disclosure pertains.

As used herein, the term "if" will be understood as meaning "when, upon", "in response to determining", or "in response to detecting", in accordance with context. Similarly, "if it is determined that ~" or "if [the condition or event mentioned] is detected" will be understood as selectively meaning "upon determining", "in response to determining", "upon detecting [the condition or event mentioned]", or "in response to detecting [the condition or event mentioned]".

The device described above may be implemented by a hardware component, a software component, and/or a combination of the hardware component and the software component. For example, the device and component described in the embodiments may be implemented using one or more general-purpose computers or special-purpose computers, such as a processor, a controller, an arithmetic logic unit (ALU), a digital signal processor, a microcomputer, a field programmable gate array (FPGA), a programmable logic unit (PLU), a microprocessor, or any other device capable of executing, and responding to, an instruction. A processing device (or processing circuit) may perform an operating system (OS) and one or more software applications running on the operating system. In addition, the processing device may also access, store, manipulate, process, and generate data in response to the execution of software. For convenience of understanding, it is described that one processing device is used, but those skilled in the art may recognize that the processing device may include a plurality of processing elements and/or a plurality of types of processing elements. For example, the processing device may include a plurality of processors or one processor and one controller. In addition, other processing configuration such as a parallel processor is also possible.

Software may include a computer program, code, an instruction, or a combination of one or more of them, and may configure the processing device to perform a desired operation, or independently or collectively instruct the processing device. In order to be interpreted by the processing device or provide an instruction or data to the processing device, the software and/or data may be embodied in any type of machine, component, physical device, computer storage medium, or device. The software may be also distributed on a networked computer system, and be stored or executed in a distribution method. The software and data may be stored in one or more computer-readable recording media.

The method according to the embodiment may be implemented in a program instruction form executable via various computer means, and be recorded on a computer-readable medium. In this case, the medium may be also used to continuously store a computer-executable program, or temporarily store it for execution or download. In addition, the medium may be a variety of recording means or storage means of a form in which a single hardware or a plurality of hardware are coupled, and is not limited to a medium directly connected to any computer system, and may be also a medium distributed on a network. An example of the medium may be configured to include a magnetic medium such as hard disk, floppy disk, and magnetic tape, an optical recording medium such as CD-ROM and DVD, a magneto-optical medium such as floptical disk, and ROM, RAM, flash memory, etc., and store a program instruction. In addition, another example of the medium may also be an application store for distributing an application, a website for supplying or distributing other various software, and a recording medium or storage medium managed by a server, etc.

Although the embodiments have been described by limited embodiments and drawings as above, various modifications and variations are possible from the above description by those skilled in the art. For example, a suitable result may be achieved although the described technologies are performed in different order from the described method, and/or components such as the described system, structure, device, circuit, etc. are coupled or combined in a different form from the described method or are replaced or substituted with other components or equivalents.

Therefore, other implementations, other embodiments, and equivalents to the claims also pertain to the scope of the claims described below.

## Claims

1. An electronic device comprising:
a motion sensor for outputting a signal for obtaining motion data corresponding to a movement of the electronic device;
a camera module comprising an image sensor, and comprising an OIS module configured to perform optical image stabilization (OIS), based on the motion data;
a processor; and
a memory for storing at least one instruction executable by the processor,
wherein the at least one instruction is configured to cause the electronic device to:
obtain a raw image from the camera module during the movement of the electronic device;
obtain movement information of the OIS module, which is based on the motion data, and a lens shading correction (LSC) table for compensating for the brightness of the raw image, wherein the LSC table comprises a gain value for each channel for compensating for the brightness for each block of the raw image;
shift the LSC table with respect to the center of the image sensor, based on the movement information; and
process the brightness for each block of the raw image by channel of the shifted LSC table and generate a corrected image.

2. The electronic device of claim 1, wherein the OIS module comprises a lens assembly, and an actuator for moving the lens assembly in a direction of intersecting an optical axis,
the movement information of the OIS module comprises a first displacement value and a second displacement value that are coordinate values of the center of the lens assembly taking the center of the image sensor as an origin point, and
the at least one instruction shifts the LSC table, based on the first displacement value and the second displacement value.

3. The electronic device of claim 2, wherein when the number of channels of the LSC table is greater than the number of blocks of the raw image,
the at least one instruction generates the corrected image by using some of a plurality of channels comprised in the LSC table.

4. The electronic device of claim 2, wherein when the number of channels of the LSC table is equal to the number of blocks of the raw image,
the at least one instruction extends the LSC table by adding a channel to the LSC table from the outermost portion of the LSC table, and generates the corrected image by using some of a plurality of channels comprised in the extended LSC table.

5. The electronic device of claim 1, further comprising an illuminance sensor for outputting a signal for measuring illuminance around the electronic device,
wherein the at least one instruction applies a weight to the gain value for each channel of the LSC table, based on the illuminance.

6. The electronic device of claim 5, wherein the at least one instruction selects any one LSC table from among a previously stored plurality of LSC tables but, when the illuminance exceeds a predefined illuminance, selects a first LSC table from among the plurality of LSC tables.

7. The electronic device of claim 5, wherein the at least one instruction selects any one LSC table from among a previously stored plurality of LSC tables but, when the illuminance is less than or equal to a predefined illuminance, selects a second LSC table from among the plurality of LSC tables.

8. The electronic device of claim 1, wherein the gain value for each channel of the LSC table is determined based on a color temperature and the amount of infrared.

9. The electronic device of claim 1, wherein the motion sensor comprises at least one of an acceleration sensor for outputting a signal for obtaining acceleration data or a gyro sensor for outputting a signal for obtaining angular velocity data, and
the at least one instruction obtains motion data corresponding to the movement of the electronic device, based on at least one of the acceleration data or the angular velocity data.

10. The electronic device of claim 1, wherein the blocks of the raw image are assigned a red (R) value, a green (G) value, and a blue (B) value, respectively, and
the at least one instruction applies the gain values to the red (R) value, the green (G) value, and the blue (B) value and compensates for the brightness of the raw image.

11. An electronic device comprising:
a motion sensor for outputting a signal for obtaining motion data corresponding to a movement of the electronic device;
a camera module comprising a lens assembly, an image sensor, and a circuit board on which the image sensor is disposed, and comprising a carrier for moving the circuit board in a direction of intersecting an optical axis, to perform optical image stabilization (OIS), based on the motion data;
a processor; and
a memory for storing at least one instruction executable by the processor,
wherein the at least one instruction is configured to cause the electronic device to:
obtain a raw image from the camera module during the movement of the electronic device;
obtain movement information of the circuit board, which is based on the motion data, and an LSC table for compensating for the brightness of the raw image, wherein the LSC table comprises a gain value for each channel for compensating for the brightness for each block of the raw image;
shift the LSC table with respect to the optical axis, based on the movement information; and
process the brightness for each block of the raw image by channel of the shifted LSC table and generate a corrected image.

12. The electronic device of claim 11, wherein the movement information of the circuit board comprises a first displacement value and a second displacement value that are coordinate values of the center of the image sensor taking the center of the lens assembly as an origin point, and
the at least one instruction shifts the LSC table, based on the first displacement value and the second displacement value.

13. The electronic device of claim 12, wherein when the number of channels of the LSC table is greater than the number of blocks of the raw image,
the at least one instruction generates the corrected image by using some of a plurality of channels comprised in the LSC table.

14. The electronic device of claim 12, wherein when the number of channels of the LSC table is equal to the number of blocks of the raw image,
the at least one instruction extends the LSC table by adding a channel to the LSC table from the outermost portion of the LSC table, and generates the corrected image by using some of a plurality of channels comprised in the extended LSC table.

15. The electronic device of claim 11, further comprising an illuminance sensor for outputting a signal for measuring illuminance around the electronic device,
wherein the at least one instruction applies a weight to the gain value for each channel of the LSC table, based on the illuminance.
